# EUROPÄISCHE PATENTSCHRIFT

(11) **EP 0 760 259 B1**
(45) Veröffentlichungstag und Bekanntmachung des Hinweises auf die Patenterteilung: **24.11.1999**
(21) Anmeldenummer: 96109862.1
(22) Anmeldetag: 19.06.1996
(51) Int. Cl.: B05B 7/14, B65G 53/42

(54) **Injektor-Vorrichtung zur Pulver-Sprühbeschichtung**
Injector device for powder spray coating
Dispositif d'injection pour le revêtement par pulvérisateur de poudre

(30) Priorität: 26.08.1995 DE 19531421
(43) Veröffentlichungstag der Anmeldung: 05.03.1997
(73) Patentinhaber: ITW Gema AG, 9015 St. Gallen (CH)
(72) Erfinder: Rutz, Guido, 9202 Gossau (CH)
(74) Vertreter: Vetter, Ewald Otto, Dipl.-Ing.

(56) Entgegenhaltungen:
- EP-A- 0 689 875
- GB-A- 2 056 932

## Beschreibung

Die Anmeldung betrifft eine Injektor-Vorrichtung zur Pulver-Sprühbeschichtung gemäß Anspruch 1.

Aus der Patentschrift DE 41 14 097 C2 ist eine Vorrichtung zur Pulverbeschichtung bekannt, welche parallel und mit Abstand nebeneinander drei Rohre aufweist, von welchen das mittlere Rohr zur Druckluftzufuhr und die beiden benachbarten Rohre zur Förderung von Pulver aus einem Pulverbehälter dienen. Vom unteren Ende des mittleren Rohres strömt Luft zu zwei Injektordüsen, welche die Luft in das untere Ende der beiden zur Pulverförderung dienenden Rohre blasen. Diese Luftströme saugen Pulver in das untere Ende der beiden Rohre. Das untere Ende der Vorrichtung ist durch einen Fluidisierboden gebildet, welcher sich über den Querschnitt von allen drei Rohren hinauserstreckt und Luft aus dem mittleren Rohr in den Pulverbehälter bläst, um darin befindliches Pulver zu fluidisieren.

Aus der britischen Patentanmeldungsveröffentlichung GB 2 179 099 A ist eine Luftstrom-Saugdüse für granulatförmiges und flüssiges Material bekannt. Diese bekannte Düse besteht aus einem Förderrohr und einem das Förderrohr koaxial mit radialem Abstand umgebenden Druckluftzufuhrrohr, welches an seinem vorderen Ende in das vordere Ende des Förderrohres hinein abgebogen ist, derart, daß zwischen den beiden Rohrenden ein ringförmiger Düsenschlitz gebildet ist, durch welchen die Druckluft in das vordere Ende des Förderrohres einströmt und dort einen Unterdruck erzeugt, durch welchen das zu fördernde Material in den Druckluftstrom und damit in das Förderrohr gesaugt wird. Eine Vorrichtung zur Fluidisierung von pulverförmigen Material hat die Düse nicht.

Aus der EP 0 184 994 B1 ist die Verwendung von Druckluft-Schalldämpfern als Pulver-Filter bekannt. aus der DE 40 21 674 A1 ist eine Vorrichtung mit koaxial ineinander angeordneten Rohren bekannt, die bis zu einem Anschlag in einem Pulver-Behälter eintauchbar ist.

GB-A-2 056932 zeigt eine Injektorvorrichtung bei der die Druckluftrohre vom Pulverrohr radial beabstandet sind, dieses aber nicht umgeben, und bei der weiterhin kein lösbar befestigter, getrennter Fluidisierkörper vorgesehen ist. Die Druckluftzufuhr zum Fluidisierkörper und zur Injektordüse findet über getrennte Druckluftrohre statt.

Die nicht vorveröffentlichte EP-A-6 89 875 zeigt eine Injektorvorrichtung mit einem Druckluftrohr welches vom Pulverrohr radial beabstandet ist.

Durch die Erfindung soll die Aufgabe gelöst werden, eine Injektor-Vorrichtung zu schaffen, welche weniger mit Pulver verschmutzt werden kann, sowie leichter von anhaftendem Pulver gereinigt werden kann. Pulverstrom-Umlenkstellen sollen weitgehend vermieden werden, da sie die Gefahr bringen, daß sich Pulver an ihnen ablagert und/oder die Oberflächen der Umlenkstellen vom Pulver abgerieben (abrasive Wirkung) werden.

Ferner soll ohne Schwankungen eine gleichmäßige Förderung des Pulvers auch dann erzielt werden, wenn nur kleine Pulvermengen gefördert werden.

Gleichzeitig soll durch die Erfindung berücksichtigt werden, daß wesentliche Teile leicht und schnell ausgetauscht werden können, ohne daß besondere Werkzeuge, lange Demontagezeiten oder lange Betriebsunterbrechnungen erforderlich sind.

Diese Aufgabe wird gemäß der Erfindung durch die Merkmale von Anspruch 1 gelöst.

Weitere Merkmale der Erfindung sind in den Unteransprüchen enthalten.

Die Erfindung wird im folgenden mit Bezug auf die Zeichnungen anhand von bevorzugten Ausführungsformen als Beispiele beschrieben. In den Zeichnungen zeigen
- Fig. 1: einen vertikalen Axialschnitt durch eine im wesentlichen insgesamt kreiszylindrische Injektor-Vorrichtung zur Pulver-Sprühbeschichtung nach der Erfindung,
- Fig. 2: eine vergrößerte Einzelheit von Fig. 1,
- Fig. 3: eine Draufsicht auf die Einzelheit von Fig. 2, wobei Fig. 3 zwei Fluidisiervorrichtungen schematisch zeigt, während in den Fig. 1 und 2 zum Zwecke einer deutlicheren Gesamtdarstellung nur eine Fluidisiervorrichtung um 90° um eine vertikale Mittelachse versetzt angeordnet gezeichnet ist,
- Fig. 4: einen Axialschnitt einer weiteren Ausführungsform einer Injektor-Vorrichtung nach der Erfindung,
- Fig. 5: eine Draufsicht auf die stromabwärtige Stirnseite eines kreiszylindrischen vorderen Endstücks von Fig. 4,
- Fig. 6: einen Axialschnitt längs der Ebene VI - VI in Fig. 5,
- Fig. 7: einen Axialschnitt längs der Ebene VII - VII in Fig. 5,
- Fig. 8: einen Axialschnitt eines Teils einer weiteren Ausführungsform der Injektor-Vorrichtung nach der Erfindung, ähnlich Fig. 4.

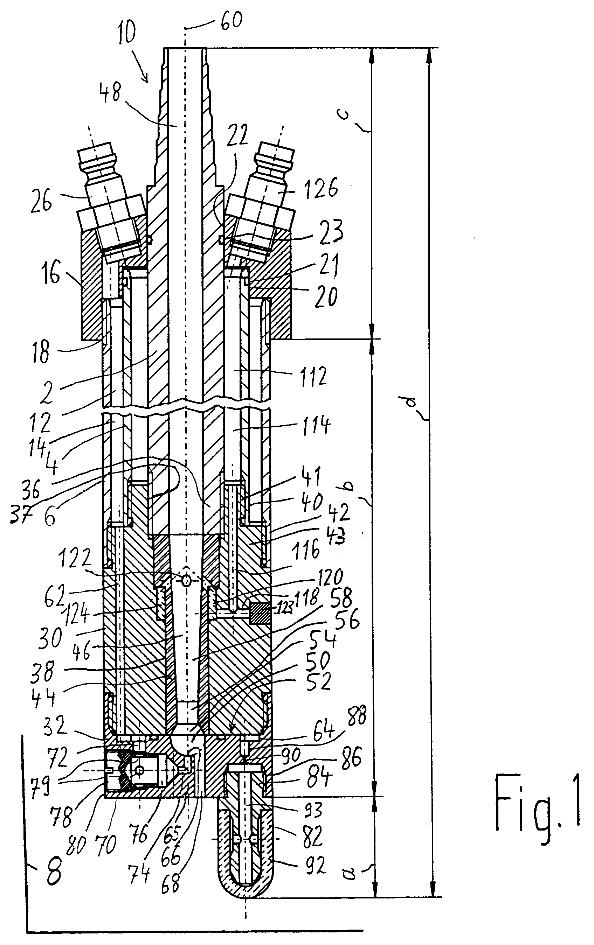

Die in den Zeichnungen dargestellten Injektor-Vorrichtungen zur Pulver-Sprühbeschichtung nach der Erfindung enthalten koaxial ineinander mit radialem Abstand angeordnet und von ungefähr gleicher Länge ein Pulverrohr 2, ein Außenrohr 6 und dazwischen ein Innenrohr 4. Die Injektor-Vorrichtung kann vertikal, schräg oder quer in einen Pulverbehälter 8 eingetaucht werden, um daraus Beschichtungspulver abzusaugen und zu einer nicht dargestellten Sprühvorrichtung zu fördern, welche das Beschichtungspulver auf einen zu beschichtenen Gegenstand sprüht. Am stromabwärigen, hinteren, d.h. in Fig. 1 oberen Ende 10 der Injektorvorrichtung ragt das Innenrohr 4 über das Außenrohr 6 hinaus und das Pulverrohr 2 ragt über das Innenrohr 4 hinaus. Dieses hintere Ende des Pulverrohres 2 hat einen abgesetzten, nach hinten hin kleiner werdenden Außenumfang zum Aufstecken und Anschließen eines Schlauches, an dessen anderem Ende die Pulver-Sprühvorrichtung angeschlossen ist. Der ringförmige Zwischenraum 12 zwischen dem Innenrohr 4 und dem Außenrohr 6 ist ein erster Abschnitt 12 eines ersten Druckluftkanals 14. Ein ringförmiger hinterer Verbindungskörper 16 ist mittels eines Gewindes 18 auf das hintere Ende des Außenrohres 6 aufgeschraubt und mit inneren Absätzen 20 und 22 druckluftdicht auf die hinteren Enden des Innenrohres 4 und des Pulverrohres 2 aufgesteckt. Dadurch werden diese Teile axial und radial in relativen Positionen zueinander gehalten. Zwischen den Absätzen 20 und 22 einerseits und dem Pulverrohr 2 andererseits befinden sich Ringdichtungen 21 und 23. Der hintere Verbindungskörper 16 begrenzt das hintere Ende des ersten Abschnittes 12 des ersten Druckluftkanals 14 und ist mit einem ersten Druckluftanschlußstück 26 versehen, mittels welchem eine Druckluftquelle mit dem ersten Abschnitt 12 des ersten Druckluftkanals 14 verbunden werden kann.

Das Pulverrohr 2 ist an seinem stromaufwärtigen, vorderen, d.h. in den Zeichnungen unteren, Ende 36 ein kleines Stück länger als das Innenrohr 4, und das Außenrohr 6 ist länger als das Pulverrohr 2. Die drei Rohre 2, 4 und 6 sind über ein hülsenförmiges vorderes Zwischenstück 30 mechanisch und strömungsmäßig mit einem Injektorkopf oder vorderen Endstück 32 verbunden. Das Zwischenstück 30 und das Endstück 32 haben einen gleich großen kreisrunden Außendurchmesser wie der mit ihnen axial fluchtende Außendurchmesser des Außenrohres 6. Das vordere Ende 36 des Pulverrohres 2 ist in einen hinteren Gewindeabschnitt 37 einer stufenförmig nach unten oder vorne hin kleiner werdenden Durchgangsbohrung 38 des Zwischenstücks 30 eingeschraubt. Das vordere Ende 40 des Innenrohres 4 ist auf einen hinteren Absatz 41 des Zwischenstücks 30 geschraubt. Das vordere Ende 42 des Außenrohres 6 ist auf einen mittleren Absatz 43 am hinteren Ende des Zwischenstücks 30 geschraubt. In der Durchgangsbohrung 38 ist austauschbar eine Injektorhülse 44 vom hinteren (oberen) zum vorderen (unteren) Ende hin austauschbar eingesteckt, deren Injektorkanal 46 sich an den Pulverrohrkanal 48 anschließt und diesen mit einer Injektor-Unterdruckkammer 50 strömungsmäßig verbindet. Die Unterdruckkammer 50 ist durch einen zum Endstück 32 hin trichterartig erweiterten Öffnungsrand 54 des Injektorkanals 46 und eine ihm gegenüberliegende halbkugelförmige Vertiefung 55 in der nach oben zeigenden hinteren Stirnseite 52 des Endstückes 32 gebildet. Der Injektorkanal 46 hat stromabwärts nach dem Öffnungsrand 54 nacheinander einen kurzen kreiszylindrischen Kanalabschnitt 56 mit gleichbleibender Querschnittsgröße und dann einen über seine größte Länge hinweg reichenden, in Strömungsrichtung trichterartig weiter werdenden hinteren Kanalabschnitt 58, der bis zum Pulverrohrkanal 48 reicht.

Das vordere Zwischenstück 30 hält die vorderen Ende der drei Rohre 2, 4 und 6 relativ zueinander in einer bestimmten Position und begrenzt das vordere Ende des ersten Abschnittes 12 des ersten Druckluftkanals 14. Das Pulverrohr 2 und der Injektorkanal 46 haben eine gemeinsame Mittelachse 60. Im Zwischenstück 30 ist parallel zum Injektorkanal 46 eine Bohrung als ein zweiter Abschnitt 62 des ersten Druckluftkanals 14 gebildet, welcher sich durch die gesamte Länge des vorderen Zwischenstücks 30 hindurch erstreckt und den ersten Abschnitt 12 des ersten Druckluftkanals 14 mit einem Ringkanal 64 strömungsmäßig verbindet. Der Ringkanal 64 ist in Form einer ringförmigen Nut koaxial zur Mittelachse 60 in der stromabwärtigen hinteren Stirnseite 52 des Endstücks 32 (und/oder in der gegenüberliegenden Stirnseite des Zwischenstücks 30) gegenüber dem zweiten Abschnitt 62 des ersten Druckluftkanals 14 gebildet, welcher in ihn mündet. Im Endstück 32 ist gemäß den Fig. 1 bis 3 eine Injektordüse 65 gebildet, die am Grund der halbkugelförmigen Ausnehmung 50 eine Injektor-Düsenöffnung 66 axial zur Mittelachse 60 aufweist, deren Strömungsrichtung axial in den Injektorkanal 46 gerichtet ist. Die Injektor-Düsenöffnung 66 ist mit radialem Abstand von einem, im Horizontalschnitt gesehen hufeneisenförmigen, Pulveransaugkanal 68 umgeben, welcher sich von der stromaufwärtigen vorderen, d.h. in Fig. 1 unteren, Stirnseite 70 des Endstücks 32 parallel zur Mittelachse 60 bis in die Injektor-Unterdruckkammer 50 geradlinig erstreckt und tangential zur Wand der Unterdruckkammer 50 angeordnet ist. Im Endstück 32 kreuzen sich eine zur Mittelachse 60 parallel angeordnete, vom Ringkanal 64 wegführende Bohrung 72 als dritter Kanalabschnitt und eine rechtwinklig dazu angeordnete Bohrung 74 als vierter Kanalabschnitt des ersten Druckluftkanals 14. Dieser vierte Kanalabschnitt 74 mündet in den Düsenkanal der Injektor-Düsenöffnung 66. Im Kreuzungsbereich zwischen dem dritten Abschnitt 72 und dem vierten Abschnitt 74 befindet sich ein Pulverfilter 76, der aus einem mikroporösen Material besteht und die Aufgabe hat, eine Rückströmung von Beschichtungspulver von der Injektor-Düsenöffnung 66 in den ersten Druckluftkanal 14 zu verhindern. Der Kreuzungsbereich zwischen dem dritten Abschnitt 72 und dem vierten Abschnitt 74 des ersten Druckluftkanals 14 ist zur Außenseite des Endstücks 32 durch einen hohlen Gewindestopfen 78 verschlossen, welcher Durchgangsöffnungen 79 zur Verbindung des dritten Abschnitts 72 mit dem vierten Abschnitt 76 hat und herausgeschraubt werden kann, um den Pulverfilter 76 auszuwechseln. Die aus der Injektordüsenöffnung 66 ausströmende Druckluft des ersten Druckluftkanals 14 erzeugt in der Unterdruckkammer 50 eine Saugwirkung, durch welche Beschichtungspulver aus dem Pulverbehälter 8 durch den Pulveransaugkanal 68 in den Injektorkanal 46 gesaugt und vom Druckluftstrom durch das Pulverrohr 2 hindurch zu der nicht dargestellen Sprühvorrichtung transportiert wird.

Auf der vorderen Stirnseite 70 des Endstücks 32 befindet sich innerhalb seines Außenumfanges 80, ohne über diesen Außenumfang 80 seitlich überzustehen, mindestens ein austauschbarer luftdurchlässiger Fluidisierkörper 82. Der Fluidisierkörper 82 hat einen Gewindesockel 84, welcher in eine Sackloch-Gewindebohrung 86 geschraubt ist, die in der unteren, d.h. vorderen Stirnseite 70 gebildet ist und parallel zur Mittelachse 60 verläuft. Vom Boden der Gewindebohrung 86 erstreckt sich eine zur Mittelachse 60 parallele Fluidisierluftbohrung 88 in den Ringkanal 64. Dadurch strömt ein Teil der Druckluft des ersten Druckluftkanals 14 vom Ringkanal 64 durch die Fluidisierluftbohrung 88 und dann durch den luftdurchlässig Fluidisierkörper 82 aus der Injektor-Vorrichtung heraus in den Pulverbehälter 8. Die Fluidisierluftbohrung 88 wirkt als Strömungsdrossel und/oder enthält eine, vorzugsweise austauschbare Strömungsdrossel 90 zur Einstellung des Fluidisierluftanteils, welcher von der Druckluft des ersten Druckluftkanals 14 abzweigt.

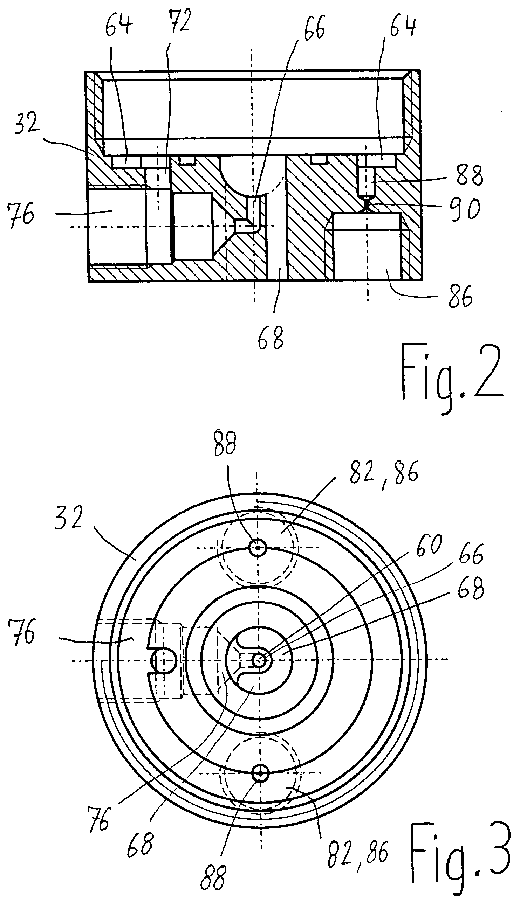

Der Fluidisierkörper 82 kann einstückig oder mehrstückig sein. Er besteht vorzugsweise aus einem haubenförmigen Fluidisierelement 92 aus luftdurchlässig mikroporösem Material und dem in ihn eingesetzten Gewindesockel 84 aus einem anderen, nicht luftdurchlässigen Material, welcher jedoch Kanäle 93 hat, durch welche die Fluidisierluft durch den Gewindesockel 84 hindurch zu den an ihn angrenzenden Innenflächen des luftdurchlässig mikroporösen Fluidisierelements 92 strömt. Fluidisierkörper 82 und einzelne Fluidisierelemente 92 sind handelsübliche und damit billige Teile, die beispielsweise auch als Druckluftschalldämpfer verwendet werden. Gemäß den Fig. 1 und 2 ist es möglich, nur einen einzigen Fluidisierkörper 82 zu verwenden. Gemäß anderen Ausführungsformen können um die Mittelachse 60 herum mehrere Fluidisierkörper 82 über Fluidisierluftbohrungen 88 mit dem Ringkanal 64 strömungsmäßig verbunden sein.

Gemäß der Draufsicht von Fig. 3 auf die hintere, stromabwärtige oder obere Stirnseite 52 des Endstücks 32 von Fig. 1 ist ersichtlich, daß die Ausführungsform von Fig. 1 zwei Fluidisierkörper 82 haben kann, welche diametral zur Mittellinie 60 und je um 90° in Umfangsrichtung um die Mittellinie 60 versetzt zum horizontalen vierten Abschnitt 74 des ersten Druckluftkanals 14 angeordnet sind. Daraus ist ersichtlich, daß die Fig. 1 und 2 eine Ausführungsform und Fig. 3 eine andere Ausführungsform darstellen können. Im vorliegenden Falle ist jedoch angenommen worden, daß die Fig. 1, 2 und 3 eine einzige Ausführungsform zeigen, wobei in den Fig. 1 und 2 einer der beiden Fluidisierkörper 82 um 90° um die Mittelachse 60 versetzt dargestellt ist, um alle Strömungswege in einer Zeichnungsebene darstellen zu können.

Zwischen dem Pulverrohr 2 und dem Innenrohr 4 ist ein im Querschnitt ringförmiger Zwischenraum 112 gebildet, welcher ein erster Abschnitt eines zweiten Druckluftkanals 114 ist und durch diese beiden Rohre 2 und 4 sowie an den Enden durch den hinteren Verbindungskörper 16 und das vordere Zwischenstück 30 begrenzt wird. Der zweite Druckluftkanal 114 hat nacheinander einen an den ersten Abschnitt 112 sich anschließenden zweiten Abschnitt 116 in Form einer zur Mittellinie 60 achsparallelen Sackbohrung, einen dritten Abschnitt 118 rechtwinklig zur Mittelachse 60 und den Grund der Sackbohrung 116 kreuzend, einen vierten Abschnitt 120 in Form eines zwischen dem Verbindungsstück 30 und der Injektorhülse 44 gebildeten Ringkanals koaxial zur Mittelachse 60, und einen fünften Abschnitt 122 in Form von mehreren Bohrungen, welche den als Ringkanal ausgebildeten vierten Abschnitt 120 mit dem Pulverrohrkanal 48 strömungsmäßig verbinden. Die Bohrungen des fünften Abschnitts 122 sind kegelförmig schräg zur Mittelachse 60 angeordnet, wobei die Kegelspitze in Pulverströmungsrichtung im Pulverrohr 2 zeigt. Der vierte Abschnitt 120 ist durch einen Pulverfilter 124 in Form eines ringförmigen Körpers aus mikroporösem luftdurchlässigem Material ausgefüllt. Dieser Pulverfilter 124 verhindert ein Zurückströmen von Pulver aus dem Pulverrohr 2 in den zweiten Druckluftkanal 114. Die rechtwinklig zur Mittelachse 60 verlaufende, den dritten Abschnitt 118 bildende Bohrung des zweiten Druckluftkanals 114 ist nach außen durch ein Verschlußelement 123 verschlossen. Der hintere Verbindungskörper 16 ist mit einem zweiten Druckluftanschlußstück 126 versehen, durch welches eine Druckluftquelle (nicht dargestellt) mit dem ersten Abschnitt 112 des zweiten Druckluftkanals 114 strömungsmäßig verbunden werden kann. Die Druckluftquelle kann die gleiche sein, die auch an den ersten Abschnitt 12 des ersten Druckluftkanals 14 angeschlossen ist, jedoch vorzugsweise über einstellbare Druckeinstellgeräte und/oder Durchfluß-Einstellgeräte.

Fig. 1 zeigt die Injektorvorrichtung gemäß der bevorzugten Ausführungsform im Maßstab 1:1, wobei die Rohre 2, 4 und 6 abgebrochen und dadurch verkürzt dargestellt sind. Die dargestellte Ausführungsform hat beispielsweise folgende Abmessungen: a = 24 mm, b = 510 mm, c = 70 mm und d = 604 mm. Die Fig. 2 und 3 sind im Maßstab 2:1 dargestellt.

Vorzugsweise besteht das Pulverrohr 2 aus Polypropylen, die Injektorhülse 44 aus Teflon zur Vermeidung eines Ansinterns von Pulver, der hintere, d.h. obere Verbindungskörper 16, das Zwischenstück 30, das Endstück 32, das Innenrohr 4 und das Außenrohr 6 je aus Aluminium.

Gemäß einer nicht dargestellten Ausführungsform ist der erste Abschnitt 12 des ersten Druckluftkanals 14 nicht zwischen dem Innenrohr 4 und dem Außenrohr 6 gebildet, sondern zwischen dem Pulverrohr 2 und dem Innenrohr 4. Hierbei ist der ersten Abschnitt 112 des zweiten Druckluftkanals 114 zwischen dem Innenrohr 4 und dem Außenrohr 6 gebildet ist, in welchem Falle die zweiten Abschnitte 62 und 116 der ersten und zweiten Druckluftkanäle 14 und 114 miteinander vertauscht sind.

Die Injektorvorrichtung kann auch als Pulver-Tauchpumpe bezeichnet werden, die am unteren Ende einer Anordnung aus mehreren koaxial ineinander angeordneten Rohren eine Injektorpumpe oder Saugstrahlpumpe hat.

Gemäß einer weiteren Ausführungsform der Erfindung ist die Injektor-Düsenöffnung 66 nicht durch das vordere Endstück 32 gebildet, sondern durch eine an gleicher Stelle in das vordere Endstück 32 eingesetzte Injektordüse. Die Injektordüse ist vorzugsweise austauschbar eingesetzt.

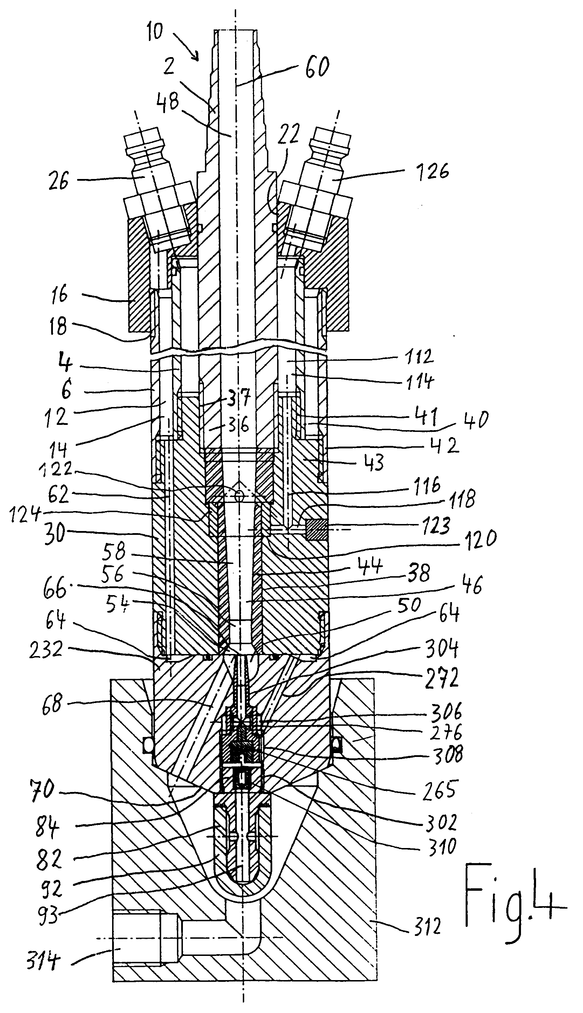

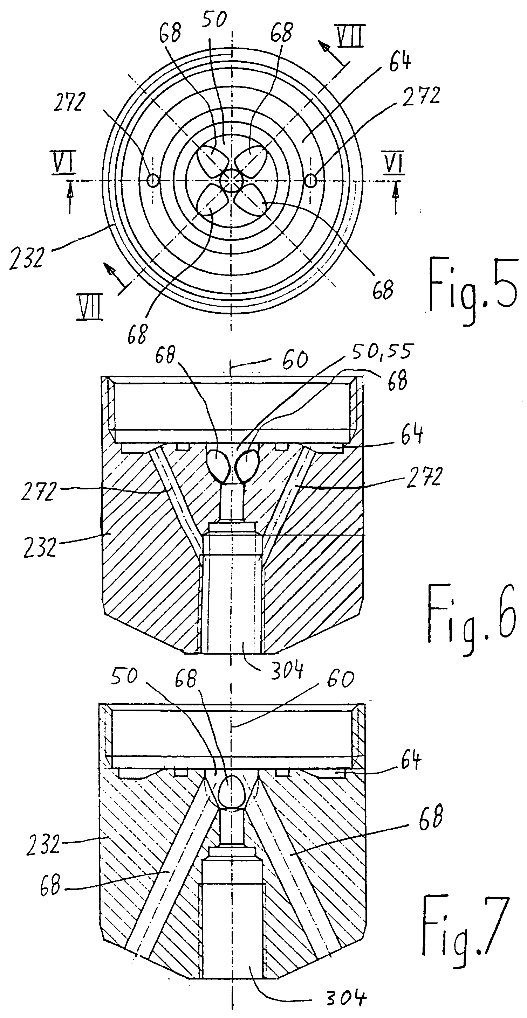

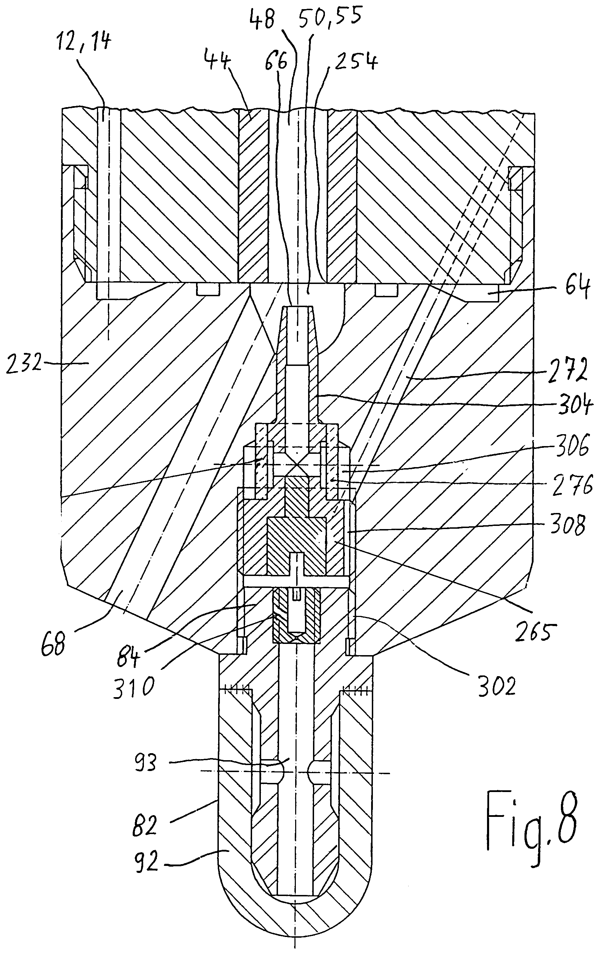

Im folgenden werden die beiden weiteren Ausführungsformen nach den Fig. 4 bis 7 und Fig. 8 nur soweit beschrieben, wie sie sich von der Ausführungsform nach den Fig. 1 bis 3 unterscheiden. In den Fig. 4 bis 8 sind Teile, welche gleich sind wie Teile der Fig. 1 bis 3, mit gleichen Bezugszahlen versehen. Daraus ist ersichtlich, daß in den Fig. 4 bis 8 nur ein stromaufwärtiges vorderes Endstück 232 und eine auswechselbar darin eingesetzte Injektordüse 265 anders sind als das stromaufwärtige Endstück 32 und die mit ihm einstückige Injektordüse 65 der Fig. 1 bis 3.

Der einzige Unterschied zwischen den Ausführungsformen der Fig. 4 und 8 besteht darin, daß in Fig. 4 eine längere Injektordüse 265 verwendet wird, deren Düsenöffnung 66 in der Trennebene zwischen dem vorderen Endstück 232 und dem Zwischenstück 30 liegt, während in Fig. 8 eine kürzere Injektordüse 265 verwendet wird, deren Düsenöffnung 66 gegenüber der Trennebene stromaufwärts in das Endstück 232 hinein zurückversetzt ist. Ferner ist in Fig. 8 der stromaufwärtige Öffnungsrand 254 der austauschbaren Injektorhülse 44 scharfrandig, während er bei den anderen Ausführungsformen trichterartig ausgebildet ist. Die beiden Injektordüsen 265 der Fig. 4 und 8 sind gegeneinander austauschbar.

Die Injektordüse 265 ist in einen Gewindeabschnitt 302 einer axialen Durchgangsbohrung 304 austauschbar eingeschraubt, welche im vorderen Endstück 232 axial zur Mittelachse 60 gebildet ist. In den Gewindeabschnitt 302 ist außerdem, nach der Injektordüse 265, der Gewindesockel 84 eines Fluidisierkörpers 82 austauschbar geschraubt, dessen Fluidisierelement 92 aus mikroporösem, luftdurchlässigem, jedoch pulversperrendem Material über die stromaufwärtige vordere Stirnseite 70 des vorderen Endstücks 232 übersteht. Diese vordere Stirnseite 70 ist bis zum Fluidisierkörper 82 hin über ihre gesamten Ausdehnung kegelförmig ausgebildet, wobei die Kegelspitze in der Mittelachse 60 liegt.

Um die Mittelachse 60 herum gleichmäßig verteilt und schräg zu ihr sind im vorderen Endstück 232 mehrere geradlinige Bohrungen 272 gebildet, welche je einen dritten Abschnitt des ersten Druckluftkanals 14 bilden und sich vom Ringkanal 64 bis in eine Ringkammer 306 erstrecken, welche zwischen der Injektordüse 265 und der Wand der Durchgangsbohrung 304 des vorderen Endstückes 232 gebildet ist. Von der Ringkammer 306 gelangt Druckluft des ersten Druckluftkanals 14 durch einen Pulverfilter 276 aus mikroporösem Material, welcher für Beschichtungspulver undurchlässig ist, und sich daran anschließende Radialbohrungen in den Düsenkanal der Injektor-Düsenöffnung 66. Ferner gelangt Druckluft von der Ringkammer 306 über Nuten 308, die im Außenumfang der Injektordüse 265 gebildet sind, und eine Strömungsdrossel 310 im Gewindesockel 84 in den Fluidisierkörper 82 und durch dessen Fluidisierelement 92 hindurch in die Außenumgebung der Injektor-Vorrichtung. Die Strömungsdrossel 310 ist im Gewindesockel 84 austauschbar eingesetzt.

Mehrere geradlinige Bohrungen als Pulveransaugkanäle 68 erstrecken sich schräg zur Mittelachse 60 und senkrecht zur abgeschrägten vorderen Stirnseite 70 bis in die Injektor-Unterdruckkammer 50 und sind um die Mittelachse 60 herum gleichmäßig verteilt.

Für die Injektor-Unterdruckkammer 50 braucht bei allen Ausführungsformen kein zusätzlicher Raum wie beispielsweise die Vertiefung 55 vorgesehen zu werden, sondern sie kann auch durch den stromaufwärtigen Teil 54 und 56 des Injektorkanals 46 gebildet sein.

Das fein-poröse Fluidisierelement 92 läßt die Fluidisierluft nur mit niedriger Geschwindigkeit, wolkenartig, in die Außenumgebung entweichen, um dort Pulver in der Fluidisierluft in einen Schwebezustand zu bringen, damit das Pulver durch die Pulveransaugkanäle 68 leicht abgesaugt werden kann. Die wolkenartig sanfte Verteilung der Fluidisierluft ermöglicht es, die Einlaßöffnungen der Pulveransaugkanäle 68 nahe bei dem Fluidisierelement 92 anzuordnen und dadurch der Injektor-Vorrichtung insgesamt eine schlanke Form mit kleinem Außendurchmesser zu geben.

Bei allen Ausführungsformen der Fig. 1 bis 8 wird die Druckluft vom Ringkanal 64 sowohl der Injektordüse 65 und 265 als Förderluft als auch dem Fluidisierkörper 82 als Fluidisierluft zugeführt. Hierfür benötigt die Injektor-Vorrichtung insgesamt nur einen einzigen Druckluftanschluß 26.

Bei allen Ausführungsformen der Figuren 1 bis 8 ist das Zwischenstück 30 mit Gewinden versehen und an die Rohre 2, 4 und 6 sowie an das Endstück 32 bzw. 232 lösbar angeschraubt.

Zum Spülen der Injektorvorrichtung mit Druckluft, um aus ihr alle Pulverpartikel zu entfernen, kann auf das vordere Endstück 32 oder 232 entsprechend Fig. 4 in eine Spülkappe 312 gesteckt werden, welche die Pulveransaugkanäle 68 und die Fluidisierkörper 82 unter Freilassung eines Zwischenraumes überdeckt und gegenüber der Außenumgebung vollständig oder teilweise abschirmt. Ein Durchgangskanal 314 der Spülkappe kann an eine Druckluftquelle (nicht dargestellt) angeschlossen werden, um Druckluft durch den Durchgangskanal 314, das Fluidisierelement 92, die Injektordüse 65 oder 265 und den Pulverrohrkanal 48 zu blasen, die Pulverreste entfernt und dadurch die Vorrichtung sauber macht. Während dieses Druckluft-Spülvorganges kann die Druckluft der ersten und zweiten Druckluftkanäle 14 und 114 eingeschaltet bleiben.

## Patentansprüche

1. Injektorvorrichtung zur Pulver-Sprühbeschichtung enthaltend: Ein Zwischenstück (30), durch welches eine Durchgangsöffnung (38) sich hindurch erstreckt, die eine gerade Mittelachse (60) hat und mindestens an ihrem stromaufwärtigen Anfangsabschnitt als Injektorkanal (46) ausgebildet ist; ein stromaufwärtiges vorderes Endstück (32; 232), welches an einer stromaufwärtigen vorderen Stirnseite des Zwischenstücks (30) angeordnet und mit einer Injektordüse (65; 265) versehen ist, deren stromabwärtige Düsenöffnung (66) axial in den Injektorkanal (46) des Zwischenstücks (30) gerichtet ist, um einen aus der Düsenöffnung (66) austretenden Förderluftstrahl und von ihm angesaugtes Beschichtungspulver durch den Injektorkanal (46) zu fördern; mindestens einen Pulveransaugkanal (68), welcher sich durch das vordere Endstück (32) von einer Endstück-Außenseite (70) bis in einen Injektor-Unterdruckraum (50) am stromaufwärtigen Anfang des Injektorkanals (46) erstreckt; mindestens einen Fluidisierkörper (82), welcher am vorderen Endstück (32) befestigt ist und eine Vielzahl von kleinen Luftdurchlaßöffnungen zum Blasen von Fluidisierluft in den Außenraum um das vordere Endstück (30) aufweist; ein Pulverrohr (2), welches sich axial zur Mittelachse (60) erstreckt und eine stromabwärtige Fortsetzung des Injektorkanals (46) auf der vom Endstück (32) abgewandten Seite des Zwischenstücks (30) bildet; ein Druckluftrohr (6), welches das Pulverrohr (2) mit radialem Abstand umgibt und einen ersten Kanalabschnitt (12) eines ersten Druckluftkanals (14) begrenzt; erste Druckluftanschlußmittel (26) zum Anschluß des ersten Kanalabschnitts (12) an eine Druckluftquelle; weitere Kanal-Abschnitte (62, 64, 72, 74, 88; 62, 64, 68, 272, 308) des ersten Druckluftkanals (14), welche sich von seinem ersten Kanalabschnitt (12) durch das Zwischenstück (30) und dann durch das Endstück (32) bis zur Injektordüse (65; 265) und bis zum Fluidisierkörper (82) erstrecken, um die Druckluft als Förderluft zu der Injektordüse und als Fluidisierluft zu dem Fluidisierkörper zuzuführen.

2. Injektorvorrichtung nach Anspruch 1,
**dadurch gekennzeichnet,** daß
zwischen dem Zwischenstück (30) und dem Endstück (32) ein sich um die Mittelachse (60) erstreckender Ringkanal (64) gebildet ist, welcher einerseits durch mindestens einen durch das Zwischenstück (30) hindurchführenden Kanalabschnitt (62) mit dem ersten Kanalabschnitt (12) verbunden ist und von welchem andererseits mindestens einer der weiteren Kanalabschnitte (72, 74, 88; 272,) des ersten Druckluftkanals (14) zur Injektordüse (65; 265) und zum Fluidisierkörper (82) abzweigt.

3. Injektorvorrichtung nach Anspruch 2,
**dadurch gekennzeichnet,** daß
der Ringkanal (64) durch eine Nut in einem der beiden Teile Endstück (32) oder Zwischenstück (30) gebildet und durch das betreffende andere dieser beiden Teile überdeckt ist.

4. Injektorvorrichtung nach einem der vorhergehenden Ansprüche,
**dadurch gekennzeichnet,** daß
der mindestens eine Pulveransaugkanal (68) quer oder schräg zur Mittelachse (60) geradlinig durch das vordere Endstück (32) sich erstreckt.

5. Injektorvorrichtung nach einem der vorhergehenden Ansprüche,
**dadurch gekennzeichnet,** daß
die Injektordüse (265) und der Fluidisierkörper (82) hintereinander axial zur Mittelachse (60) angeordnet sind.

6. Injektorvorrichtung nach Anspruch 5,
**dadurch gekennzeichnet,** daß
im vorderen Endstück (32) eine Durchgangsbohrung (304) axial zur Mittelachse (60) gebildet ist und daß die Injektordüse (265) und der Fluidisierkörper (82) in diese Durchgangsbohrung (304) von außen her austauschbar eingesetzt sind.

7. Injektorvorrichtung nach Anspruch 6,
**dadurch gekennzeichnet,** daß
mindestens einer der Kanalabschnitte (272) des ersten Druckluftkanals (14), welcher den Ringkanal (64) mit der Injektordüse (265) und dem Fluidisierkörper (82) strömungsmäßig verbindet, sich vom Ringkanal (64) bis in die Durchgangsbohrung (304) erstreckt und innerhalb der Druckgangsbohrung (304) mit dem Düsenkanal der Düsenöffnung (66) und mit dem Fluidisierkörper (82) in Strömungsverbindung ist.

8. Injektorvorrichtung nach Anspruch 7,
**dadurch gekennzeichnet,** daß
in der Durchgangsbohrung (304) des Endstücks (232) ein Ringraum gebildet ist, welcher zwischen der Wand der Durchgangsbohrung (304) und der Injektordüse (265) liegt, daß der mindestens eine Kanalabschnitt (272) des ersten Druckluftkanals (14) den Ringkanal (64) mit dem Ringraum (306) verbindet, und daß in der Injektordüse (265) Kanäle (308) gebildet sind, über welche der Ringraum (306) mit dem Fluidisierkörper (82) in Strömungsverbindung steht.

9. Injektorvorrichtung nach einem der vorhergehenden Ansprüche,
**dadurch gekennzeichnet,** daß
die stromaufwärtige vordere Stirnseite (70) des vorderen Endstücks (32) kegelartig ausgebildet ist, und daß der Fluidisierkörper (82) im Zentrum der Kegelspitze angeordnet ist.

10. Injektorvorrichtung nach einem der vorhergehenden Ansprüche,
**dadurch gekennzeichnet,** daß
mindestens ein Pulveransaugkanal (68) schräg zur Mittelachse (60) der Injektorvorrichtung sich durch das vordere Endstück (232) erstreckt und in dessen vorderen Stirnseite (70) endet.

11. Injektorvorrichtung nach einem der Ansprüche 2 bis 5,
**dadurch gekennzeichnet,** daß
die Injektordüse (65) und der Fluidkörper (82) über getrennte, im vorderen Endstück (32) gebildete, Kanalabschnitte (72, 74, 88) des ersten Druckluftkanals (14) mit dem Ringkanal (64) strömungsmäßig verbunden sind.

12. Injektorvorrichtung nach Anspruch 11,
**dadurch gekennzeichnet,** daß
die Injektordüse (65) und ihre Injektoröffnung (66) durch einen Teil des vorderen Endstücks (32) einstückig gebildet sind.

13. Injektorvorrichtung nach einem der Ansprüche 1 bis 9 oder 11 oder 12,
**dadurch gekennzeichnet,** daß
der im Endstück (32) gebildete Pulveransaugkanal (68) eine halbkreisförmige oder hufeisenförmige, den Düsenkanal der Injektordüsenöffnung (66) umgebende Querschnittsform hat, in einer Querschnittsebene rechtwinklig zur Mittelachse (60) des Pulverrohres (2) gesehen.

14. Injektorvorrichtung nach einem der vorhergehenden Ansprüche,
**dadurch gekennzeichnet,** daß
ein zweites Druckluftrohr (4) koaxial und mit radialem Abstand zum Pulverrohr (2) und mit radialem Abstand zum ersten Druckluftrohr (6) angeordnet ist und einen ersten Abschnitt (112) eines zweiten Druckluftkanals (114) begrenzt, daß zweite Druckluftanschlußmittel (126) zum Anschluß einer oder der Druckluftquelle an diesen ersten Abschnitt (112) des zweiten Druckluftkanals (114) vorgesehen sind, und daß im Zwischenstück (30) mindestens eine Bohrung (116, 118) als weiterer Abschnitt des zweiten Druckluftkanals (114) gebildet ist, welcher seinen ersten Abschnitt (112) mit mindestens einem Druckluftauslaß (122) strömungsmäßig verbinden, welcher in den Injektorkanal (46) mündet.

15. Injektorvorrichtung nach Anspruch 14,
**dadurch gekennzeichnet,** daß
das zweite Druckluftrohr (4) zwischen dem Pulverrohr (2) und dem ersten Druckluftrohr (6) angeordnet ist.

16. Injektorvorrichtung nach Anspruch 14 oder 15,
**dadurch gekennzeichnet,** daß
der zweite Druckluftkanal (114) in seinem stromabwärtigen Endabschnitt (120, 122) einen Pulverfilter (124) enthält, welcher Beschichtungspulver davon abhält, entgegen der Druckluftströmungsrichtung vom Injektorkanal (46) in den zweiten Druckluftkanal (114) zu wandern.

17. Injektorvorrichtung nach einem der vorhergehenden Ansprüche,
**dadurch gekennzeichnet,** daß
das radial am äußersten angeordnete Rohr (6), das Zwischenstück (30) und das Endstück (32) alle einen gleich großen und axial miteinander fluchtenden Außenumfang haben.

18. Injektorvorrichtung nach einem der vorhergehenden Ansprüche,
**dadurch gekennzeichnet,** daß
der oder die Fluidisierkörper (82) auf der vorderen Stirnseite (70) des Endstücks (32) innerhalb des Durchmessers dieses Endstücks (32) angeordnet ist oder sind.

## Claims

1. Injector device for powder spray coating, containing: an intermediate piece (30), through which extends a passage orifice (38) which has a straight mid-axis (60) and which, at least on its upstream initial portion, is designed as an injector duct (46); an upstream front end piece (32; 232) which is arranged on an upstream front end face of the intermediate piece (30) and which is provided with an injector nozzle (65; 265), the downstream nozzle orifice (66) of which is directed axially into the injector duct (46) of the intermediate piece (30), in order to convey through the injector duct (46) a conveying-air jet emerging from the nozzle orifice (66) and coating powder sucked in by the said conveying-air jet; at least one powder sucking-in duct (68) which extends through the front end piece (32) from one end-piece outer face (70) into an injector vacuum space (50) at the upstream commencement of the injector duct (46); at least one fluidizing body (82) which is fastened to the front end piece (32) and which has a multiplicity of small air-passage orifices for blowing fluidizing air into the outer space around the front end piece (32); a powder tube (2) which extends axially relative to the mid-axis (60) and which forms a downstream continuation of the injector duct (46) on that side of the intermediate piece (30) facing away from the end piece (32); a compressed-air tube (6) which surrounds the powder tube (2) at a radial distance and which limits a first duct portion (12) of a first compressed-air duct (14); first compressed-air connection means (26) for connecting the first duct portion (12) to a compressed-air source; further duct portions (62, 64, 72, 74, 88; 62, 64, 68, 272, 308) of the first compressed-air duct (14) which extend from the first duct portion (12) of the latter through the intermediate piece (30) and then through the end piece (32) as far as the injector nozzle (65; 265) and as far as the fluidizing body (82), in order to supply the compressed air as conveying air to the injector nozzle and as fluidizing air to the fluidizing body.

2. Injector device according to Claim 1, characterized in that there is formed between the intermediate piece (30) and the end piece (32) an annular duct (64) which extends around the mid-axis (60) and which, on the one hand, is connected to the first duct portion (12) by means of at least one duct portion (62) leading through the intermediate piece (30) and from which, on the other hand, at least one of the further duct portions (72, 74, 88; 272) of the first compressed-air duct (14) branches off to the injector nozzle (65; 265) and to the fluidizing body (82).

3. Injector device according to Claim 2, characterized in that the annular duct (64) is formed by a groove in one of the two parts, namely the end piece (32) or intermediate piece (30), and is covered, in either case, by the other of these two parts.

4. Injector device according to one of the preceding claims, characterized in that the at least one powder sucking-in duct (68) extends rectilinearly through the front end piece (32) transversely or obliquely relative to the mid-axis (60).

5. Injector device according to one of the preceding claims, characterized in that the injector nozzle (265) and the fluidizing body (82) are arranged in succession axially relative to the mid-axis (60).

6. Injector device according to Claim 5, characterized in that a passage bore (304) is formed in the front end piece (32) axially relative to the mid-axis (60), and in that the injector nozzle (265) and the fluidizing body (82) are inserted into this passage bore (304) exchangeably from outside.

7. Injector device according to Claim 6, characterized in that at least one of the duct portions (272) of the first compressed-air duct (14), said duct portion flow-connecting the annular duct (64) to the injector nozzle (265) and the fluidizing body (82), extends from the annular duct (64) into the passage bore (304) and is flow-connected within the passage bore (304) to the nozzle duct of the nozzle orifice (66) and to the fluidizing body (82).

8. Injector device according to Claim 7, characterized in that there is formed in the passage bore (304) of the end piece (232) an annular space which is located between the wall of the passage bore (304) and the injector nozzle (265), in that at least one duct portion (272) of the first compressed-air duct (14) connects the annular duct (64) to the annular space (306), and in that there are formed in the injector nozzle (265) ducts (308), via which the annular space (306) is flow-connected to the fluidizing body (82).

9. Injector device according to one of the preceding claims, characterized in that the upstream front end face (70) of the front end piece (32) is of cone-like design, and in that the fluidizing body (82) is arranged in the centre of the cone apex.

10. Injector device according to one of the preceding claims, characterized in that at least one powder sucking-in duct (68) extends obliquely relative to the mid-axis (60) of the injector device through the front end piece (232) and terminates in the front end face (70) of the latter.

11. Injector device according to one of Claims 2 to 5, characterized in that the injector nozzle (65) and the fluidizing body (82) are flow-connected to the annular duct (64) via separate duct portions (72, 74, 88) of the first compressed-air duct (14) which are formed in the front end piece (32).

12. Injector device according to Claim 11, characterized in that the injector nozzle (65) and its injector orifice (66) are formed in one piece by means of part of the front end piece (32).

13. Injector device according to one of Claims 1 to 9 or 11 or 12, characterized in that the powder sucking-in duct (68) formed in the end piece (32) has a semi-circular or horseshoe-shaped cross-sectional form surrounding the nozzle duct of the injector-nozzle orifice (66), as seen in a cross-sectional plane at right angles to the mid-axis (60) of the powder tube (2).

14. Injector device according to one of the preceding claims, characterized in that a second compressed-air tube (4) is arranged coaxially and at a radial distance from the powder tube (2) and at a radial distance from the first compressed-air tube (6) and limits a first portion (112) of a second compressed-air duct (114), in that second compressed-air connection means (126) are provided for connecting a or the compressed-air source to this first portion (112) of the second compressed-air duct (114), and in that there is formed in the intermediate piece (30) at least one bore (116, 118) as a further portion of the second compressed-air duct (114), which flow-connects its first portion (112) to at least one compressed-air outlet (122) opening into the injector duct (46).

15. Injector device according to Claim 14, characterized in that the second compressed-air tube (4) is arranged between the powder tube (2) and the first compressed-air tube (6).

16. Injector device according to Claim 14 or 15, characterized in that the second compressed-air duct (114) contains, in its downstream end portion (120, 122), a powder filter (124) which prevents coating powder from travelling from the injector duct (46) into the second compressed-air duct (114) in the opposite direction to the compressed-air flow direction.

17. Injector device according to one of the preceding claims, characterized in that the tube (6) arranged radially outermost, the intermediate piece (30) and the end piece (32) all have an axially mutually aligned outer circumference of equal size.

18. Injector device according to one of the preceding claims, characterized in that the fluidizing body or fluidizing bodies (82) is or are arranged on the front end face (70) of the end piece (32) within the diameter of this end piece (32).

## Revendications

1. Dispositif d'injection pour le revêtement par pulvérisation de poudre, qui comprend : une pièce intermédiaire (30) que traverse sur sa longueur une ouverture de passage (38), qui présente un axe central droit (60) et qui est conçu, au moins au niveau de son segment de départ en amont, sous forme d'un canal d'injection (46) ; une pièce d'extrémité avant en amont (32 ; 232), laquelle est disposée au niveau d'une face frontale avant en amont de la pièce intermédiaire (30) et qui est dotée d'une buse d'injection (65 ; 265), dont l'ouverture de buse en aval (66) est orientée axialement dans le canal d'injection (46) de la pièce intermédiaire (30) pour transporter un jet d'air primaire sortant de l'ouverture de buse (66) et une poudre de revêtement aspirée par celui-ci à travers le canal d'injection (46) ; au moins un canal d'aspiration de poudre (68) qui s'étend à travers la pièce d'extrémité avant (32) depuis une face extérieure (70) de la pièce d'extrémité jusque dans un espace de dépression de l'injecteur (50) au départ en amont du canal d'injection (46); au moins un corps de fluidisation (82), lequel est fixé à la pièce d'extrémité avant (32) et comporte une pluralité de petites ouvertures traversantes pour l'air destinées à souffler l'air de fluidisation dans l'espace extérieur autour de la pièce d'extrémité avant (32) ; un tuyau à poudre (2) qui s'étend axialement par rapport à l'axe central (60) et qui constitue un prolongement en aval du canal d'injection (46) sur la face de la pièce intermédiaire (30) opposée à la pièce d'extrémité (32) ; un tuyau d'air comprimé (6), qui entoure le tuyau à poudre (2) avec un espacement radial et qui délimite un premier segment de canal (12) d'un premier canal d'air comprimé (14); un premier élément de raccord d'air comprimé (26) pour le raccordement du premier segment de canal (12) à une source d'air comprimé ; d'autres segments de canal (62, 64, 72, 74, 88 ; 62, 64, 68, 272, 308) du premier canal d'air comprimé (14), qui s'étendent depuis son premier segment de canal (12) à travers la pièce intermédiaire (30), puis à travers la pièce d'extrémité (32) jusque dans la buse d'injection (65 ; 265) et jusque dans le corps de fluidisation (82), pour amener l'air comprimé en tant qu'air primaire dans la buse d'injection et en tant qu'air de fluidisation dans le corps de fluidisation.

2. Dispositif d'injection selon la revendication 1, caractérisé en ce qu'il est conçu entre la pièce intermédiaire (30) et la pièce d'extrémité (32) un canal circulaire (64) s'étendant autour de l'axe central (60), lequel est, d'une part, relié au premier segment de canal (12) par l'intermédiaire d'au moins un segment de canal (62) traversant la pièce intermédiaire (30) et duquel bifurque, d'autre part, au moins l'un des autres segments de canal (72, 74, 88 ; 272) du premier canal d'air comprimé (14) vers la buse d'injection (65 ; 265) et vers le corps de fluidisation (82).

3. Dispositif d'injection selon la revendication 2, caractérisé en ce que le canal circulaire (64) est conçu par une rainure dans l'un des deux éléments que constituent pièce d'extrémité (32) et pièce intermédiaire (30) et qu'il est recouvert par l'autre des deux éléments en question.

4. Dispositif d'injection selon l'une des revendications précédentes, caractérisé en ce que ledit au moins un canal d'aspiration de poudre (68) s'étend suivant une ligne droite transversalement ou en biais par rapport à l'axe central (60) à travers la pièce d'extrémité avant (32).

5. Dispositif d'injection selon l'une des revendications précédentes caractérisé en ce que la buse d'injection (265) et le corps de fluidisation (82) sont disposés à la suite l'un de l'autre suivant un plan axial par rapport à l'axe central (60).

6. Dispositif d'injection selon la revendication 5, caractérisé en ce qu'un alésage traversant (304) est conçu dans la pièce d'extrémité avant (32) suivant un plan axial par rapport à l'axe central (60) et en ce que la buse d'injection (265) et le corps de fluidisation (82) sont mis en place de l'extérieur dans cet alésage traversant (304) de façon échangeable.

7. Dispositif d'injection selon la revendication 6, caractérisé en ce qu'au moins l'un des segments de canal (272) du premier canal d'air comprimé (14), lequel relie le canal circulaire (64) à la buse d'injection (265) et au corps de fluidisation (82) sur le plan de l'écoulement, s'étend depuis le canal circulaire (64) jusque dans l'alésage traversant (304) et est raccordé à l'intérieur de l'alésage traversant (304) au canal de buse de l'ouverture de buse (66) et au corps de fluidisation (82) sur le plan de l'écoulement.

8. Dispositif d'injection selon la revendication 7, caractérisé en ce qu'il est conçu un espace circulaire dans l'alésage traversant (304) de la pièce d'extrémité (232), lequel est disposé entre la paroi de l'alésage traversant (304) et la buse d'injection (265), en ce que ledit au moins un segment de canal (272) du premier canal d'air comprimé (14) relie le canal circulaire (64) à l'espace circulaire (306) et en ce que des canaux (308) sont formés dans la buse d'injection (265) par l'intermédiaire desquels l'espace circulaire (306) est relié au corps de fluidisation (82) sur le plan de l'écoulement.

9. Dispositif d'injection selon l'une des revendications précédentes, caractérisé en ce que la face frontale avant en amont (70) de la pièce d'extrémité avant (32) est conçue de façon conique et en ce que le corps de fluidisation (82) est placé au centre de la pointe.

10. Dispositif d'injection selon l'une des revendications précédentes, caractérisé en ce qu'au moins un canal d'aspiration de poudre (68) s'étend en biais par rapport à l'axe central (60) du dispositif d'injection à travers la pièce d'extrémité avant (232) et qu'il se termine dans sa face frontale avant (70).

11. Dispositif d'injection selon l'une des revendications 2 à 5, caractérisé en ce que la buse d'injection (65) et le corps de fluidisation (82) sont reliés sur le plan de l'écoulement au canal circulaire (64) par l'intermédiaire de segments de canal (72, 74, 88) du premier canal d'air comprimé (14) séparés et formés dans la pièce d'extrémité avant (32).

12. Dispositif d'injection selon la revendication 11, caractérisé en ce que la buse d'injection (65) et son ouverture d'injection (66) sont conçues d'une seule pièce par une partie de la pièce d'extrémité avant (32).

13. Dispositif d'injection selon l'une des revendications 1 à 9, ou 11 ou 12, caractérisé en ce que le canal d'aspiration de poudre (68) formé dans la pièce d'extrémité (32) présente une forme de section transversale entourant le canal de buse de l'ouverture de buse d'injection (66) semi-circulaire ou en fer à cheval, en considérant un plan de section transversale à angle droit par rapport à l'axe central (60) du tuyau à poudre (2).

14. Dispositif d'injection selon l'une des revendications précédentes, caractérisé en ce qu'un second tuyau d'air comprimé (4) est disposé coaxialement et avec un espacement radial par rapport au tuyau à poudre (2) et avec un espacement radial par rapport au premier tuyau d'air comprimé (6) et qu'il délimite un premier segment (112) d'un second canal d'air comprimé (114), en ce que des éléments secondaires de raccord d'air comprimé (126) sont prévus pour le raccordement d'une ou de la source d'air comprimé à ce premier segment (112) du second canal d'air comprimé (114) et en ce qu'il est formé dans la pièce intermédiaire (30) au moins un alésage (116, 118) en tant que segment supplémentaire du second canal d'air comprimé (114), lequel sur le plan de l'écoulement relie son premier segment (112) à au moins une évacuation d'air comprimé (122) qui débouche dans le canal d'injection (46).

15. Dispositif d'injection selon la revendication 14, caractérisé en ce que le second tuyau d'air comprimé (4) est disposé entre le tuyau à poudre (2) et le premier tuyau d'air comprimé (6).

16. Dispositif d'injection selon la revendication 14 ou 15, caractérisé en ce que le second canal d'air comprimé (114) comporte un filtre à poudre (124) dans son segment d'extrémité en aval (120, 122), lequel empêche la poudre de revêtement, à l'encontre de la direction d'écoulement de l'air comprimé, de passer du canal d'injection (46) dans le second canal d'air comprimé (114).

17. Dispositif d'injection selon l'une des revendications précédentes, caractérisé en ce que le tuyau placé radialement le plus à l'extérieur (6), la pièce intermédiaire (30) et la pièce d'extrémité (32) présentent tous une circonférence extérieure de même dimension et s'alignant axialement les unes par rapport aux autres.

18. Dispositif d'injection selon l'une des revendications précédentes, caractérisé en ce que le ou les corps de fluidisation (82) est ou sont disposé(s) sur la face frontale avant (70) de la pièce d'extrémité (32) à l'intérieur du diamètre de cette pièce d'extrémité (32).
